Europäisches Patentamt

European Patent Office

Office européen des brevets

(11) Veröffentlichungsnummer: **0 326 933 B1**

(12) **EUROPÄISCHE PATENTSCHRIFT**

(45) Veröffentlichungstag der Patentschrift: **29.12.93**

(21) Anmeldenummer: **89101309.6**

(22) Anmeldetag: **26.01.89**

(51) Int. Cl.5: **G11B 11/10**, G11B 13/04

(54) **Verfahren zur Herstellung eines flächenförmigen, mehrschichtigen magneto-optischen Aufzeichnungsmaterials.**

(30) Priorität: **02.02.88 DE 3803013**

(43) Veröffentlichungstag der Anmeldung:
**09.08.89 Patentblatt 89/32**

(45) Bekanntmachung des Hinweises auf die
Patenterteilung:
**29.12.93 Patentblatt 93/52**

(84) Benannte Vertragsstaaten:
**DE FR GB NL**

(56) Entgegenhaltungen:
**EP-A- 0 239 390**
**EP-A- 0 291 847**
**EP-A- 0 326 930**

**JOURNAL OF VACUUM SCIENCE & TECHNOLOGY/SECTION A, Band 6, Nr. 3, Second Series, Mai/Juni 1988, Seite 1862, American Vacuum Society, Woodbury, NY, US; R.P. FRANKENTHAL et al.: "Summary abstract: Duplex coatings for the protection of magneto-optic alloys against oxidation and corrosion"**

(73) Patentinhaber: **BASF Aktiengesellschaft**
**Carl-Bosch-Strasse 38**
**D-67063 Ludwigshafen(DE)**

(72) Erfinder: **Steininger, Helmut, Dr.**
**Dr.-Ernst-Kilb-Weg 15**
**D-6520 Worms 26(DE)**

**Beschreibung**

Die Erfindung betrifft ein neues, verbessertes Verfahren zur Herstellung eines flächenförmigen, mehrschichtigen magneto-optischen Aufzeichnungsmaterials mit

(A) einem optisch transparenten dimensionsstabilen Träger,

(B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit

(C) einer ein- oder mehrlagigen, Carbide, Nitride und/oder Oxide enthaltenden Schicht,

bei welchem man die einzelnen Schichten (B) und (C) auf dem Träger (A) in der gewünschten Reihenfolge, Anzahl und Dicke und mit dem jeweils gewünschten Aufbau über die Gasphase aufbringt, wonach man in der Aufzeichnungsschicht (B) eine definierte, senkrecht zu ihrer Oberfläche orientierte Magnetisierung induziert.

Ein Aufzeichnungsmaterial dieser Art ist aus der DE-A-33 35 689 bekannt. Darin ist die Aufzeichnungsschicht (B) 20 bis 100 nm dick. Auf ihrer dem Träger (A) abgewandten Seite liegen drei Schichten auf, von denen jede einzelne eine definierte Funktion erfüllt. So besteht die erste Schicht aus einem Material mit hohem Brechungsindex von 2,0 und mehr, wie etwa Titan-, Cer-, Antimon-, Wolfram-, Silicium-, Wismutoder Cadmiumoxid. Diese Schicht dient als Interferenzschicht. Die zweite Schicht besteht aus Metallen wie Kupfer, Silber, Chrom, Aluminium, Rhodium, Gold oder Nickel und stellt eine Reflektionsschicht dar. Die oberste Schicht wird als Antioxidationsschicht bezeichnet. Sie besteht aus Magnesium-, Aluminium-, Silicium-, Titan- oder Thoriumoxid und ist mehr als 100 nm dick.

Die Gesamtdicke der drei Schichten liegt oberhalb von 500 nm. Außerdem ist die Kombination dieser drei Schichten nicht optisch klar.

Eine weitere Ausführungsform des aus der DE-A-33 35 689 bekannten Aufzeichnungsmaterials weist lediglich die vorstehend genannte Interferenzschicht und die vorstehend genannte Antioxidationsschicht auf. Diese Zweierkombination ist zwar optisch klar, indessen ist sie erheblich dicker als 500 nm.

Einen vergleichbaren Aufbau weist das aus der DE-A-35 34 571 bekannte Aufzeichnungsmaterial auf. Hierbei besteht die erste der auf der Aufzeichnungsschicht (B) aufgebrachten Schichten aus einem Gemisch aus Siliciumcarbid und -nitrid oder Siliciumcarbid und Aluminiumnitrid und sie dient sowohl als Schutzschicht als auch als Interferenzschicht. Als zweite Schicht kommt eine reflektierende Schicht aus einem Metall wie Kupfer, Aluminium oder Gold in Betracht. Darüber kann eine Antikorrosionsschicht beliebiger Art angeordnet sein. Das Aufzeichnungsmaterial kann weitere Hilfsschichten wie eine Interferenzschicht aus Siliciummonoxid, Magnesiumfluorid oder Niob-, Tantal- oder Aluminiumoxid oder Aluminium- oder Siliciumnitrid enthalten.

Darüber hinaus geht aus der DE-A-35 00 314 ein Aufzeichnungsmaterial mit einer sowohl als Antikorrosionsschicht als auch als Interferenzschicht dienenden Schicht aus einem Oxid-Nitrid-Gemisch hervor.

Diese bekannten Aufzeichnungsmaterialien dienen dem laseroptischen Schreiben von Daten mit Hilfe impulsmodulierter Laserstrahlen, welche auf die Aufzeichnungsschichten (B) fokussiert sind und/oder senkrecht auf diese auftreffen.

Beim laseroptischen Schreiben von Daten wird an diese Aufzeichnungsmaterialien ein externes magnetisches Hilfsfeld angelegt, dessen Feldlinien senkrecht zur Oberfläche der Aufzeichnungsschichten (B) ausgerichtet sind, oder aber die Aufzeichnungsschichten (B) weisen ein entsprechend ausgerichtetes, schichtimmanentes, d.h. intrinsisches Magnetfeld auf.

Bekanntermaßen werden die aus amorphen ferrimagnetischen Lanthanid-Übergangsmetall-Legierungen bestehenden, senkrecht zu ihrer Oberfläche magnetisierten Aufzeichnungsschichten (B) beim Einschreiben der Daten durch den Laserstrahl in der Auftreffstelle erwärmt. Durch die Erwärmung nimmt die Koerzitivfeldstärke $H_c$ der Legierungen ab. Unterschreitet die Koerzitivfeldstärke $H_c$ bei einer von der jeweils verwendeten Legierung abhängigen kritischen Temperatur die Feldstärke des anliegenden externen magnetischen Hilfsfeldes oder des schichtimmanenten, d.h. intrinsischen Magnetfeldes, so entsteht in der Auftreffstelle ein Bereich, der eine der ursprünglichen Richtung entgegengesetzte Magnetisierungsrichtung aufweist. Ein solcher Bereich wird auch als "spot" bezeichnet.

Die eingeschriebenen Daten können gezielt durch lokales Erhitzen der Aufzeichnungsschicht (B) z.B. mittels eines Laserstrahls bei gleichzeitiger Einwirkung eines externen oder intrinsischen magnetischen Feldes, dessen Feldlinien senkrecht zur Schichtoberfläche ausgerichtet sind, bei Bedarf wieder gelöscht werden, wonach man neue Daten einschreiben kann. D.h. der Schreibvorgang ist reversibel.

Für das Lesen der Daten verwendet man linear polarisiertes Licht eines kontinuierlich emittierenden Dauerstrichlasers, dessen Lichtleistung nicht dazu ausreicht, das Material über die kritische Temperatur hinaus zu erwärmen. Dieser Laserstrahl wird entweder von der Aufzeichnungsschicht (B) selbst oder von einer hinter ihr angeordneten Reflektionsschicht reflektiert, wobei es zu einer Wechselwirkung zwischen den magnetischen Momenten in der Aufzeichnungsschicht (B) und dem magnetischen Vektor der Laserlichtwelle kommt. Durch diese Wechselwirkung wird die Ebene der Polarisation $\vec{E}$ des Laserlichts, welches von einem "spot" oder von einer dahinter liegenden Reflektionsschicht reflektiert wird, gegenüber der ursprünglichen Ebene um einen kleinen Winkel gedreht. Geschieht diese Drehung der Ebene der Polarisation $\vec{E}$ bei der Reflektion des Lichts an der Aufzeichnungsschicht selbst, so bezeichnet man dies als Kerr-Effekt und den Drehwinkel demnach als Kerr-Drehwinkel; wird dagegen die Ebene beim zweimaligen Durchgang des Lichts durch die Aufzeichnungsschicht gedreht, so spricht man vom Faraday-Effekt und vom Faraday-Drehwinkel.

Diese Drehung der Ebene der Polarisation $\vec{E}$ des vom Aufzeichnungsmaterial reflektierten Laserlichts kann mit Hilfe geeigneter optischer und elektronischer Geräte gemessen und in Signale umgesetzt werden.

Wenn bei den bekannten Aufzeichnungsmaterialen beim Lesen der Daten der Faraday-Effekt ausgenutzt wird, so müssen diese notwendigerweise eine Reflektionsschicht enthalten, da die Aufzeichnungsschichten (B) als solche lichtdurchlässig sind. überdies müssen Interferenzschichten vorhanden sein, um störende Beugungserscheinungen zu unterdrücken.

Selbstverständlich wirken die in den bekannten Aufzeichnungsmaterialien vorhandenen Interferenzschichten, Reflektionsschichten und Antioxidationsschichten sowie deren Kombinationen auch als Sauerstoffsperren, welche in gewissem Umfang verhindern, daß die äußerst sauerstoff- und wasserempfindliche Aufzeichnungsschicht korrodiert. Sie erfüllen diese Funktion indes nicht in einem für die Praxis ausreichendem Maß, so daß zusätzlich noch Antikorrosionsschichten mitverwendet werden müssen, welche die Aufzeichnungsschicht (B) gegen die Luft und ggf. gegen den Träger (A) hin abschließen.

Die bekannte Kombination aus einer Interferenzschicht, einer Reflektionsschicht und einer Antioxidationsschicht kann dabei nicht als eine einzige, aus mehreren separaten Lagen zusammengesetzte Antikorrosionsschicht aufgefaßt werden, weil der Aufbau und die Zusammensetzung der Kombination nicht ausschließlich von ihrer Antikorrosionswirkung, sondern in der Hauptsache von ihren anderen Funktionen bestimmt werden.

Hinsichtlich der Antikorrosionswirkung weist die bekannte Kombination Nachteile auf. Insbesondere läßt ihre Wirkung als Sauerstoffsperre zu wünschen übrig, sofern sie nicht auf der Luftseite eine vergleichsweise dicke Schicht aus beispielsweise Aluminiumoxid enthält. Außerdem ergeben sich aus der nach anderen Gesichtspunkten getroffenen Auswahl der Komponenten der übrigen Schichten Nachteile hinsichtlich der Haftung der Schichten aufeinander, der Haltbarkeit, der inneren Spannung oder der mechanischen Festigkeit. So kann eine bekannte Kombination, welche hinsichtlich der Interferenz und Reflektion optimal sein mag, eine geringe Antikorrosionswirkung aufweisen. Oder aber ihre Antikorrosionswirkung ist zwar befriedigend, indessen läßt ihre Haltbarkeit zu wünschen übrig. Wählt man dann Komponenten, welche eine besonders harte obere Schicht liefern, kann die bekannte Schichtkombination insgesamt so spröde werden, daß sie bei geringer mechanischer Beanspruchung zerspringt. Überdies können innere Spannungen darin Risse hervorrufen. All dies ist der Antikorrosionsschutzwirkung abträglich.

Der Schutz vor Korrosion ist jedoch gerade bei den in Rede stehenden Aufzeichnungsmaterialien von grundlegender Bedeutung, weil deren Aufzeichnungsschichten (B) äußerst schnell durch Wasser und/oder Luftsauerstoff zerstört werden, was einen Totalverlust der darin eingeschriebenen Daten zur Folge hat.

Hinsichtlich des Schutzes der Aufzeichnungsschichten (B) vor Korrosion wurde mit Hilfe der in der Europäischen Patentanmeldung EP-A-0 291 847 beschriebenen Antikorrosionsschicht ein bedeutsamer Fortschritt erzielt. Diese Antikorrosionsschicht ist 30 bis 250 nm dick und besteht aus zwei oder mehr Komponenten, welche in vier oder mehr separaten Lagen aus jeweils einer der Komponenten vorliegen. Hierbei wird mindestens eine der Komponenten aus der Gruppe der Elemente Bor, Aluminium, Silicium, Titan, Zirkon, Hafnium, Vanadin, Niob, Tantal, Chrom, Molybdän und Wolfram und mindestens eine andere der Komponenten aus der Gruppe der Carbide, Nitride und Oxide dieser Elemente ausgewählt. Desweiteren bestehen direkt benachbarte Lagen stets aus voneinander verschiedenen Komponenten. In einer Ausführungsform dieser Antikorrosionsschicht besteht deren oberste Lage aus $Al_2O_3$, welches durch Oxidation der Oberfläche einer Aluminiumlage mit Luft erzeugt wird. Indessen wird hierbei nicht die gesamte Aluminiumlage oxidiert, sondern sie liegt weiterhin als separate, wenn auch nun dünnere Lage in der Antikorrosionsschicht vor. Wegen ihrer aus Elementen bestehenden Lage(n) ist diese Antikorrosionsschicht nicht optisch klar. Sie kann daher lediglich zum Abdecken der Seite der Aufzeichnungsschicht (B) verwendet werden, welche nicht mit Laserlicht bestrahlt wird.

Bislang hat man die bekannten Antikorrosionsschichten nach den üblichen und bekannten Techniken der Herstellung dünner Schichten durch Aufdampfen, reaktives Aufdampfen, Ionenplattieren ("Ionplating"), "ion cluster beam deposition" (ICB) oder Kathodenzerstäubung, inklusive reaktiver Kathodenzerstäubung, erzeugt. Vorzugsweise wurde die Kathodenzerstäubung ("sputtering") angewendet. Hierzu wurden in bekannter Weise die entsprechenden Metalle, Oxide, Nitride und/oder Carbide in reiner Form in der gewünschten Reihenfolge und Menge im Hochvakuum von einem sogenannten "target" aus zerstäubt und auf geeigneten Trägern (A) oder bereits darauf befindlichen Schichten niederschlagen. Oder die Antikorrosionsschichten wurden durch Zerstäuben des reinen Metalls und Beimischen der gewünschten Menge an Sauerstoff, Stickstoff oder Kohlenwasserstoffen zu dem Prozeßgas im geeigneten Zeitpunkt in der gewünschten Weise aufbaut, was allgemein auch als reaktive Kathodenzerstäubung ("reactive sputtering") bezeichnet wird. Befindet sich hierbei das "target" in einem Magnetfeld, spricht man von reaktiver Magnetronkathodenzerstäubung ("reactive magnetron sputtring").

Indessen lassen die nach den bekannten Verfahren erzeugten Antikorrosionsschichten hinsichtlich ihrer optischen Klarheit und/oder hinsichtlich der Dicke, welche für eine ausreichende Schutzwirkung notwendig ist, noch immer zu wünschen übrig, so daß auch weiterhin ein dringender Bedarf nach dünnen, ggf. optischen klaren Antikorrosionsschichten mit zuverlässiger Schutzwirkung und nach einem praktikablen Verfahren zu ihrer Herstellung besteht.

Aufgabe der vorliegenden Erfindung ist es, ein Verfahren zur Herstellung eines flächenförmigen, mehrschichtigen magneto-optischen Aufzeichnungsmaterials mit

(A) einem optisch transparenten dimensionsstabilen Träger,

(B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit

(C) einer ein- oder mehrlagigen, Carbide, Nitride und/oder Oxide enthaltenden Schicht

zu finden, bei welchem man die einzelnen Schichten (B) und (C) auf dem Träger (A) in der gewünschten Reihenfolge, Anzahl und Dicke und mit dem jeweils gewünschten inneren Aufbau über die Gasphase aufbringt, wonach man in der Aufzeichnungsschicht (B) eine definierte, senkrecht zur ihrer Oberfläche orientierte Magnetisierung induziert, und welches Antikorrosionsschichten liefert, die optisch klar sind.

Demgemäß wurde ein Verfahren zur Herstellung eines flächenförmigen, mehrschichtigen magneto-optischen Aufzeichnungsmaterials mit

(A) einem optisch transparenten dimensionsstabilen Träger,

(B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit

(C) einer ein- oder mehrlagigen, Carbide, Nitride und/oder Oxide enthaltenden Schicht

gefunden, bei welchem man die einzelnen Schichten (B) und (C) auf dem Träger (A) in der gewünschten Reihenfolge, Anzahl und Dicke und mit dem jeweils gewünschten inneren Aufbau über die Gasphase aufbringt, wonach man in der Aufzeichnungsschicht (B) eine definierte, senkrecht zu ihrer Oberfläche orientierte Magnetisierung induziert und welches dadurch gekennzeichnet ist, daß man hierbei auf einer oder auf beiden Seiten der Aufzeichnungsschicht (B) die Schicht (C) durch

(I) Aufbringen einer 30 bis 500 nm dicken Schicht ($C_1$) aus

($C_{11}$) zwei oder mehr Komponenten, welche

($C_{12}$) in drei oder mehr separaten Element- sowie Element-carbid-, -nitrid- und -oxidlagen aus jeweils einer oder mehreren der Komponenten vorliegen, wobei

($C_{13}$) die Komponente(n) der Elementlage(n) aus der Gruppe der Elemente B, Al, Ga, In, Si, Ge, Sn, Pb, Sb, Bi, Mg, Ti, Zr, Hf, V, Nb, Ta, Cr, Mo, W, Fe, Co, Zn, Cd, La, Ce, Pr, Nd, Sm, Eu, Gd, Tb, Dy, Ho, Er, Tm, Yb, Lu und Th und

($C_{14}$) die Komponente(n) der Elementcarbid-, -nitrid- und -oxidlage(n) aus der Gruppe der Carbide, Nitride und Oxide dieser Elemente ($C_{13}$) ausgewählt werden und wobei

($C_{15}$) direkt benachbarte Lagen aus Carbiden, Nitriden und/oder Oxiden ($C_{14}$) sich stofflich voneinander unterscheiden,

($C_{16}$) zumindest zwei Lagen aus Carbiden, Nitriden und/oder Oxiden ($C_{14}$) bestehen, die durch mindestens eine 0,1 bis 30 nm dicke, aus mindestens einem der Elemente ($C_{13}$) bestehenden Lage voneinander getrennt sind und

($C_{17}$) die an die Aufzeichnungsschicht (B) direkt angrenzende oder die ihr zugewandte Lage stets aus Carbiden, Nitriden und/oder Oxiden ($C_{14}$) besteht,

und durch

(II) Umsetzen der aus mindestens einem der Elemente ($C_{13}$) bestehenden Lage(n) der Schicht ($C_1$) mit Sauerstoff, Stickstoff und/oder Kohlenstoff

erzeugt.

Das erfindungsgemäße Verfahren zur Herstellung eines flächenförmigen, mehrschichtigen magneto-optischen Aufzeichnungsmaterials wird im folgenden kurz als "erfindunsgemäßes Verfahren" bezeichnet.

Unter dem Begriff "flächenförmig" werden alle Raumformen zusammengefaßt, deren Dicke erheblich geringer ist als ihre Länge und Breite. Die erfindungsgemäßen Aufzeichnungsmaterialien können demnach band-, platten- oder scheibenförmig sein, wobei die scheibenförmigen - welche im allgemeinen als "Datenplatten" oder "Disks" bezeichnet werden - von Vorteil sind.

Das erfindungsgemäße Verfahren wird im folgenden anhand der Herstellung eines flächenförmigen, mehrschichtigen magneto-otpischen Aufzeichnungsmaterials aus einem Träger (A), einer Aufzeichnungsschicht (B) und einer Schicht (C), welche der dem Träger (A) abgewandten Seite der Aufzeichnungsschicht (B) aufliegt, im einzelnen beispielhaft dargestellt.

Diese Ausführungsform des erfindungsgemäßen Verfahrens geht vorzugsweise aus von einem üblichen und bekannten, scheibenförmigen, optisch klaren dimensionsstabilen Träger (A), welcher einen Durchmesser von 90 oder 130 nm und eine Dicke von 1,2 mm aufweist und aus Glas oder aus Kunststoffen wie z.B. Polycarbonat, Polymethylmethacrylat, Polymethylpenten, Celluloseacetobutyrat oder aus Gemischen aus Poly(vinylidenfluorid) und Polymethylmethacrylat oder Polystyrol und Poly(2,6-dimethyl-phen-1,4-ylenether) besteht. Hiervon werden die Träger (A) aus Kunststoffen besonders bevorzugt verwendet.

Diejenige Oberfläche des dimensionsstabilen Trägers (A), welche der aufzubringenden Aufzeichnungsschicht (B) zugekehrt ist, kann Strukturen aufweisen.

Die Strukturen in der Oberfläche des Trägers (A) liegen im Mikrometer- und/oder Submikrometerbereich. Sie dienen der exakten Führung des Leselaserstrahls und gewährleisten ein rasches und genaues Ansprechen der Spurlagenservo- und Autofokussiereinrichtungen in den laseroptischen Schreib- und Leseköpfen der Plattenlaufwerke, d.h. sie ermöglichen oder verbessern das "tracking". Außerdem können diese Strukturen selbst Daten sein, so wie dies beispielsweise bei den bekannten Audio- oder Video-Compact-Disks der Fall ist, oder sie können der Kodierung der eingeschriebenen Daten dienen. Die Strukturen bestehen aus erhabenen Teilen und/oder aus Vertiefungen. Diese liegen in der Form von durchgehenden konzentrischen oder spiralförmigen Spurrillen oder als isolierte Hügel und/oder Löcher vor. Außerdem kann die Struktur eine oder mehr oder weniger glatte Wellenform haben. Den Spurrillen wird hierbei der Vorzug gegeben. Sie weisen in ihrer Querrichtung eine rechteckige Sägezahnartige, eine V-förmige oder eine trapezartige Kontur auf. Ihre Vertiefungen werden im allgemeinen als "grooves" und ihre erhabenen Teile als "land" bezeichnet. Von besonderem Vorteil sind Spurrillen mit 50 bis 200 nm tiefen und 0,4 bis 0,8 $\mu$m breiten "grooves", zwischen denen jeweils ein 1 bis 3 $\mu$m breites "land" liegt.

Die Herstellung des bei dem erfindungsgemäßen Verfahren besonders bevorzugt verwendeten dimensionsstabilen Trägers (A) erfolgt in an sich bekannter Weise durch die formgebende Bearbeitung des den Träger (A) aufbauenden Kunststoffs oder Kunststoffgemischs mit Hilfe der Spritzgußtechnik unter Reinraumbedingungen, so wie dies beispielsweise im einzelnen in der deutschen Patentanmeldung P 37 27 093.1 (O.Z. 0050/39384) beschrieben wird.

Ganz besonders bevorzugt werden in dieser Weise die dimensionsstabilen Träger (A) mit Spurrillen auf einer ihrer Oberfläche hergestellt. Diese werden im weiteren für das erfindungsgemäße Verfahren verwendet.

Der Herstellung des dimensionsstabilen Trägers (A) schließt sich das Aufbringen der Aufzeichnungsschicht (B) auf der mit Spurrillen versehenen Oberfläche des Trägers (A) an.

Vorzugsweise wird die Aufzeichnungsschicht (B) durch Kathodenzerstäubung ("sputtering") aufgebracht. Hierzu werden bekanntermaßen ihre Bestandteile, d.h. die Lanthanide und Übergangsmetalle, von einem sogenannten "target" aus im Hochvakuum zerstäubt und auf der betreffenden Oberfläche des dimensionsstabilen Trägers (A) in der gewünschten Zusammensetzung und Dicke in Form einer amorphen, thermisch veränderbaren Lanthanid-Übergangsmetall-Legierung abgeschieden.

Vorteilhafterweise werden die Aufzeichnungsschichten (B) in einer Dicke von 10 bis 500 nm auf der Oberfläche der Träger (A) erzeugt.

Für die Herstellung der Aufzeichnungsschichten (B) kommen die Lanthanide Pr, Nd, Sm, Eu, Gd, Tb, Dy und Ho und die Übergangsmetalle Fe und Co in Betracht. Geeignete Mischungsverhältnisse von Lanthaniden zu Übergangsmetallen sind vom Stand der Technik her bekannt. Darüber hinaus können weitere Elemente wie Sc, Y, La, Ti, Zr, Hf, V, Nb, Ta, Cr, Mo, W, Mn, Re, Ru, Os, Rh, Ir, Pd, Pt, Cu, Ag, Au, Zn, B, Al, Ga, In, Si, Ge, Sn, Pb, P, As, Sb und/oder Bi bei der Herstellung der Aufzeichnungsschichten (B) in geeigneten, vom Stand der Technik her bekannten Mengen mitverwendet werden.

Das Resultat dieser Verfahrensschritte ist das zweischichtige Material aus

(A) dem optisch klaren dimensionsstabilen Träger, welcher aus den vorstehend genannten Materialien besteht und dessen eine Oberfläche Spurrillen aufweist, und

(B) der thermisch veränderbaren Aufzeichnungsschicht aus einer amorphen Lanthanid-Übergangsmetall-Legierung geeigneter Zusammensetzung und Dicke.

Im weiteren Verlauf der in Rede stehenden Ausführungsform des erfindungsgemäßen Verfahrens wird im Verfahrensschritt (I) auf der dem Träger (A) abgewandten Seite der Aufzeichnungsschicht (B) die Schicht $(C_1)$ erzeugt.

Erfindungsgemäß dient die Schicht $(C_1)$ der Herstellung der Schicht (C), welche die Funktion der Antikorrosionsschicht in den nach dem erfindungsgemäßen Verfahren hergestellten, flächenfömigen, mehrschichtigen magnetooptischen Aufzeichnungsmaterialien erfüllt und die deshalb als "Antikorrosionsschicht (C)" bezeichnet wird.

In erfindungsgemäßer Verfahrensweise wird die Schicht $(C_1)$ in einer Dicke von 30 bis 500 nm auf der Aufzeichnungsschicht (B) erzeugt. Wegen der vorteilhaften technischen Effekte der nach dem erfindungsgemäßen Verfahren aus der Schicht $(C_1)$ hergestellten Antikorrosionsschicht (C) erübrigen sich höhere Schichtdicken. Überdies sind mit dem hierfür notwendigen Materialverbrauch keine weiteren besonderen Vorteile mehr verbunden. Die Dicke der Schicht $(C_1)$ soll indes 30 nm nicht unterschreiten, weil dann die Sperrwirkung der hieraus in erfindungsgemäßer Verfahrensweise hergestellten Antikorrosionsschicht (C) gegenüber Sauerstoff und Wasser nicht mehr in vollem Umfang befriedigt. Von Vorteil sind Dicken von 50 bis 300, insbesondere 60 bis 200 nm. Aus den Schichten $(C_1)$ dieser Dicke werden in erfindungsgemäßer Verfahrensweise Antikorrosionsschichten (C) erhalten, welche hinsichtlich der Sperrwirkung, des Materialverbrauchs, des Herstellaufwands, der mechanischen Festigkeit, Zähigkeit und Haltbarkeit ein optimales Eigenschaftsprofil aufweisen.

Bei dem erfindungsgemäßen Verfahren werden die Schichten $(C_1)$ aus zwei oder mehr Komponenten erzeugt. In den allermeisten Fällen werden hervorragende Verfahrensergebnisse bereits mit zwei bis vier Komponenten erhalten. Indessen werden auch in speziellen Fällen bei dem erfindungsgemäßen Verfahren mehr als vier Komponenten verwendet, wobei mehr als zehn Komponenten selten verwendet werden.

Die Komponenten der Schichten $(C_1)$ werden erfindungsgemäß in drei oder mehr separaten Lagen aus jeweils einer oder mehreren der Komponenten aufgebracht, d.h. die Herstellung der Schicht $(C_1)$ erfolgt so, daß sie einen mehrlagigen Aufbau hat. In den allermeisten Fällen reichen drei, vier oder fünf separate Lagen aus, um ein hervorragendes Verfahrensergebnis, d.h. eine Antikorrosionsschicht (C) mit optimalem Eigenschaftsprofil, zu erhalten. In besonderen Fällen werden sechs, sieben oder acht Lagen verwendet. Neun, zehn oder mehr Lagen werden Seltener angewendet, weil hierbei der höhere Verfahrensaufwand keine weitere Steigerung des an sich schon besonders vorteilhaften Verfahrensergebnisses zur Folge hat. Von besonderem Vorteil für das erfindungsgemäße Verfahren ist die Anwendung von drei oder vier Lagen, weil dies den geringsten Verfahrensaufwand erfordert und dennoch optimale Verfahrensergebnisse liefert.

Die separaten Lagen werden bei dem erfindungsgemäßen Verfahren in unterschiedlicher Dicke erzeugt. Von Vorteil ist es indes, wenn sie in etwa gleicher Dicke hergestellt werden. Dabei werden sie so hergestellt, daß der Übergang von einer Lage zur nächsten abrupt ist, d.h., daß sich zwischen den Lagen eine exakt definierte Grenzfläche befindet, wie etwa beim Übergang von einer stöchiometrisch zusammgensetzten Carbid-, Nitrid- oder Oxidlage $(C_{14})$ in eine reine Metallage $(C_{13})$. Die Herstellung kann indes so erfolgen, daß der Übergang fließend ist. So kann z.B. eine stöchiometrisch zusammengesetzte Carbid-, Nitrid- oder Oxidlage $(C_{14})$ über eine Zone, in welcher die Konzentration des Kohlenstoffs, Stickstoffs oder Sauerstoffs mehr oder weniger rasch abnimmt und die Metallkonzentration mehr oder weniger rasch zunimmt, in eine reine Metallage $(C_{13})$ übergehen. Ebenso können beispielsweise Oxidlagen $(C_{14})$ abrupt oder fließend in Carbid- oder Nitridlagen $(C_{14})$ übergehen.

Erfindungsgemäß von Vorteil ist eine Herstellweise, bei der ein fließender Übergang von einer Lage in die nächste entsteht, wobei es von besonderem Vorteil ist, wenn die Oxid-, Carbid- oder Nitridlagen $(C_{14})$ in die Metallagen $(C_{13})$ übergehen und die Metallagen $(C_{13})$ in entsprechender Weise in die Oxid-, Carbid- oder Nitridlagen $(C_{14})$.

Erfindungsgemäß wird die Schicht $(C_1)$ so hergestellt, daß zumindest zwei aus mindestens einem Carbid, Nitrid und/oder Oxid $(C_{14})$ bestehende Lagen durch eine 0,1 bis 30, vorteilhafterweise 1 bis 20 und insbesondere 3 bis 15 nm dicke, aus mindestens einem der Elemente $(C_{14})$ bestehenden Lage voneinander getrennt sind (= Verfahrensmerkmal $C_{16}$). Aus dieser Maßgabe folgt unmittelbar, daß Schicht $(C_1)$ nach ihrer Herstellung aus mindestens drei Lagen besteht, nämlich einer aus mindestens einem Carbid, Nitrid und/oder Oxid $(C_{14})$ bestehenden Lage, einer Lage aus mindestens einem der Elemente $(C_{13})$ und einer weiteren Lage $(C_{14})$. Selbstverständlich können darüber hinaus noch weitere Lagen $(C_{14})$ aufgebracht werden. Überdies können diese weiteren Lagen $(C_{14})$ durch weitere Lagen $(C_{13})$ voneinander getrennt sein.

Hierbei ist es für das erfindungsgemäße Verfahren obligatorisch, daß die Schicht $(C_1)$ so hergestellt wird, daß die an die Aufzeichnungsschicht (B) direkt angrenzende oder ihr zugewandte Lage stets aus Carbiden, Nitriden und/oder Oxiden $(C_{14})$ besteht, was dem anspruchsgemäßen Verfahrensmerkmal $(C_{17})$ entspricht. Hierbei ist es von besonderem Vorteil, wenn diese Lage $(C_{14})$ aus mindestens einem Nitrid oder Carbid hergestellt wird, wobei die Verwendung eines einzigen Nitrids oder Carbids von ganz besonderem Vorteil ist. Außerdem ist es hierbei von ganz besonderem Vorteil, wenn die der Aufzeichnungsschicht (B) abgewandte oberste Lage der Schicht $(C_1)$ aus mindestens einem Oxid $(C_{14})$ hergestellt wird, wobei die Verwendung eines einzigen Oxids $(C_{14})$ bevorzugt wird. Des weiteren ist es hierbei von ganz besonderem Vorteil, wenn die Elementlage(n) $(C_{13})$ aus einem der Elemente $(C_{13})$ hergestellt wird bzw. hergestellt werden.

Erfindungsgemäß werden die Komponenten für die Herstellung der Elementlagen $(C_{13})$ aus der Gruppe der Elemente B, Al, Ga, In, Si, Ge, Sn, Pb, Sb, Bi, Mg, Ti, Zr, Hf, V, Nb, Ta, Cr, Mo, W, Fe, Co, Zn, Cd, La, Ce, Pr, Nd, Sm, Eu, Gd, Tb, Dy, Ho, Er, Tm, Yb, Lu und Th ausgewählt. Von diesen Elementen $(C_{13})$ werden B, Al, Si, Ti, Zr, Hf, V, Nb, Ta, Cr, Mo und W bevorzugt und Al, Si, Ti und Ta ganz besonders bevorzugt verwendet.

Erfindungsgemäß werden die Komponenten für die Herstellung der Elementcarbid-, -nitrid- und -oxidlagen $(C_{14})$ aus der Gruppe der Carbide, Nitride und Oxide dieser Elemente $(C_{13})$ ausgewählt. Von diesen werden die Carbide, Nitride und Oxide der Elemente B, Al, Si, Ti, Zr, Hf, V, Nb, Ta, Cr, Mo und W bevorzugt und die Carbide, Nitride und Oxide der Elemente Al, Si, Ti und Ta ganz besonders bevorzugt verwendet. Von dieser sind wiederum Tantaloxid, Aluminiumnitrid, Siliciumcarbid, Siliciumoxid und Siliciumnitrid hervorzuheben.

Im Rahmen des erfindungsgemäßen Verfahrens ergibt sich die Reihenfolge des Aufbringens der verschiedenen Lagen der Schichten $(C_1)$ zwingend aus dem gewünschten und durch die vorstehend beschriebenen Vefahrensmerkmale weiter präzisierten Aufbau der jeweils herzustellenden Schicht $(C_1)$.

Beispiele von Reihenfolgen des Aufbringens, welche im Rahmen des erfindungsgemäßen Verfahrens wegen ihres vorteilhaften technischen Effekts besonders bevorzugt werden, sind - jeweils ausgehend von der Oberfläche der Aufzeichnungsschicht (B) -

1. Lage $(C_{14})$-Lage $(C_{13})$-Lage $(C_{14})$;
2. Lage $(C_{14})$-Lage $(C_{14})$-Lage $(C_{13})$-Lage $(C_{14})$;
3. Lage $(C_{14})$-Lage $(C_{13})$-Lage $(C_{14})$-Lage $(C_{13})$;
4. Lage $(C_{14})$-Lage $(C_{13})$-Lage $(C_{13})$;
5. Lage $(C_{14})$-Lage $(C_{13})$-Lage $(C_{13})$-Lage $(C_{14})$;
6. Lage $(C_{14})$-Lage $(C_{13})$-Lage $(C_{14})$-Lage $(C_{13})$-Lage $(C_{14})$ oder
7. Lage $(C_{14})$-Lage $(C_{13})$-Lage $(C_{13})$-Lage $(C_{14})$-Lage $(C_{14})$.

Methodisch und apparativ weist die Herstellung der Schicht $(C_1)$ im Verfahrensschritt (I) des erfindungsgemäßen Verfahrens keine Besonderheiten auf, sondern sie erfolgt nach den üblichen und bekannten Techniken der Herstellung dünner Schichten durch Aufdampfen, reaktives Aufdampfen, Ionenplattierung (ion plating), "ion cluster beam deposition" (ICB) oder Kathodenzerstäubung ("sputtering"), inklusive reaktiver Kathodenzerstäubung der Komponenten der unterschiedlichen Lagen der Schicht $(C_1)$ in der gewünschten und durch die Verfahrensmerkmale weiter präzisierten Reihenfolge.

Erfindungsgemäß schließt sich dem Verfahrensschritt (I) der erfindungsgemäße Verfahrensschritt (II) an, bei welchem die aus mindestens einem der Elemente $(C_{13})$ bestehenden Lage(n) der Schicht $(C_1)$ mit Sauerstoff, Stickstoff und/oder Kohlenstoff umgesetzt werden.

Naturgemäß werden hierbei die Elemente $(C_{13})$ in der oder den betreffenden Lage(n) in die entsprechenden Oxide, Carbide und/oder Nitride $(C_{14})$ umgewandelt, so daß neue Lagen $(C_{14})$ resultieren.

Ob diese neuen Lagen $(C_{14})$ weitere separate Lagen $(C_{14})$ bilden oder ob sie integraler Bestandteil der bereits vorliegenden benachbarten Lagen $(C_{14})$ werden, richtet sich nach der stofflichen Zusammensetzung der benachbarten Lagen $(C_{14})$.

Um die erfindungsgemäße Umsetzung einer Elementlage $(C_{13})$ mit Sauerstoff, Stickstoff und/oder Kohlenstoff herbeizuführen, muß diese mit reaktivem Sauerstoff, Stickstoff und/oder Kohlenstoff in Berührung gebracht werden.

Bei reaktivem Sauerstoff, Stickstoff und/oder Kohlenstoff handelt es sich um thermisch und/oder elektrisch angeregte Sauerstoff- und Stickstoffmoleküle, um Sauerstoff-, Stickstoff- und Kohlenstoffatome sowie um Sauerstoff-, Stickstoff- und Kohlenstoffionen. Die reaktiven Kohlenstoffspezies liegen überwiegend in einem Verband aus mehreren Atomen oder Ionen, d.h. als sogenannte "cluster", vor, welche man beispielsweise aus Kohlenwasserstoffen erzeugt.

Methoden für die Herstellung dieser reaktiven Spezies sind bekannt. Im allgemeinen werden sie im Vakuum oder Hochvakuum durch Erhitzen, Bestrahlen mit elektromagnetischer Strahlung und/oder Korpuskularstrahlung oder durch Beschuß mit Ionen erzeugt, wonach sie mit Hilfe elektrischer und/oder magnetischer Felder und/oder via thermischer Diffusion mit der Schicht $(C_1)$ in Berührung gebracht werden.

In zahlreichen Fällen ist die Reaktivität des molekularen Sauerstoffs gegenüber einer Elementlage $(C_{13})$ so hoch, daß man hierbei auf die vorstehend genannten energetischen Anregungsmethoden auch verzichten kann, ohne daß hierbei die Zeit bis zur vollständigen Umsetzung der betreffenden Elementlage $(C_{13})$ zu

einer Oxidlage ($C_{14}$) über Gebühr verlängert wird.

Erfindungsgemäß ist daher die Verwendung von molekularem Sauerstoff von ganz besonderem Vorteil. Hierbei kann Luft oder reiner Sauerstoff bei Normaldruck, Überdruck oder Unterdruck verwendet werden.

Die Dauer der Einwirkung der reaktiven Spezies auf die Elementlage(n) ($C_{13}$) der Schicht ($C_1$) bis zu deren vollständigen Umsetzung wird von zahlreichen Parametern, wie z.B. Art und Menge der reaktiven Spezies, Temperatur, Dicke der Schicht ($C_1$) und Natur der Elemente ($C_{13}$), bestimmt und variiert daher breit. Auf alle Fälle darf die Mindestdauer der Einwirkung nicht allzu lange überschritten werden, weil ansonsten die Aufzeichnungsschicht (B) geschädigt wird. Indessen läßt sich der Endpunkt der Umwandlung in zahlreichen Fällen vorzüglich in einfacher Weise visuell oder mittels üblicher und bekannter optischer Methoden bestimmen, so daß eine Schädigung der Aufzeichnungsschicht (B) leicht vermieden werden kann: So wird die aufgrund ihrer Elementlage(n) ($C_{13}$) opake und gegebenenfalls stark reflektierende Schicht ($C_1$) zum Zeitpunkt der fortgeschrittenen Umwandlung optisch klar, wonach die Einwirkung der reaktiven Spezies sofort beendet wird.

Methodisch und apparativ bietet der erfindungsgemäße Verfahrensschritt (II) keine Besonderheiten, sondern er wird mit Hilfe üblicher und bekannter Apparaturen durchgeführt, wie sie allgemein für die Erzeugung, Handhabung und Umsetzung reaktiver Gase verwendet werden.

Dem erfindungsgemäßen Verfahrensschritt (II) können sich weitere Verfahrensschritte anschließen, welche dem Entfernen reaktiver Spezies aus der mit Hilfe des erfindungsgemäßen Verfahrens erzeugten Antikorrosionsschicht (C) oder dem Aufbringen weiterer Schichten wie Interferenz- und/oder Reflektionsschichten und/oder weiterer magnetisierbarer Schichten dienen.

Dem erfindungsgemäßen Verfahrensschritt (II) oder den ihm gegebenenfalls nachfolgenden Verfahrensschritten schließt sich die für magneto-optische Aufzeichnungsmaterialien typische, übliche und bekannte, definierte, senkrecht zur Oberfläche orientierte Magnetisierung der Aufzeichnungsschicht (B) an.

Das Ergebnis der vorstehend beschriebenen Ausführungsform des erfindungsgemäßen Verfahrens ist das flächenförmige, mehrschichtige magneto-optische Aufzeichnungsmaterial mit

(A) dem optisch klaren dimensionsstabilen Träger, welcher aus den vorstehend genannten Materialien besteht und dessen eine Oberfläche Spurrillen aufweist,

(B) der thermisch veränderbaren Aufzeichnungsschicht aus einer amorphen Lanthanid-Übergangsmetall-Legierung geeigneter Zusammensetzung und Dicke und

(C) der in der vorstehend im einzelnen beschriebenen Weise hergestellten, ggf. optisch klaren Antikorrosionsschicht.

In einer weiteren Ausführungsform des erfindungsgemäßen Verfahrens werden zwei Antikorrosionsschichten (C) aus zwei Schichten ($C_1$) auf den beiden Seiten der Aufzeichnungsschicht (B) erzeugt. Es versteht sich von selbst, daß man bei der Herstellung derjenigen Antikorrosionsschicht (C), welche auf der dem Träger (A) zugewandten Seite der Aufzeichnungsschicht (B) zu liegen kommt, die betreffende Schicht ($C_1$) auf dem Träger (A) oder einer gegebenenfalls hierauf aufliegenden Interferenzschicht vor dem Aufbringen der Aufzeichnungsschicht (B) erzeugt und vollständig umsetzt. Es versteht sich ebenso von selbst, daß man hierbei im wesentlichen die umgekehrte Reihenfolge des Aufbringens der einzelnen separaten Lagen der Schicht ($C_1$) einzuhalten hat, um den erfindungsgemäßen Verfahrensmerkmalen ($C_{16}$) und ($C_{17}$) genüge zu tun. Außerdem versteht es sich von selbst, daß man hierfür nur solche Schichten ($C_1$) verwendet, welche nach ihrer erfindungsgemäßen Umsetzung mit Sauerstoff, Stickstoff und gegebenenfalls noch Kohlenstoff (Verfahrensschritt II) optisch klare Schichten (C) liefern. Dagegen wird diejenige Antikorrosionsschicht (C), welche der dem Träger (A) abgewandten Seite der Aufzeichnungsschicht (B) aufliegt, nach der vorstehend angegebenen ersten Ausführungsform des erfindungsgemäßen Verfahrens hergestellt, wobei hier auch opake Schichten (C) in Betracht kommen.

Auch bei dieser Ausführungsform des erfindungsgemäßen Verfahrens können sich dem erfindungsgemäßen Verfahrensschritt (II) die weiteren vorstehend genannten Verfahrensschritt anschließen.

Auch hier schließt sich dem erfindungsgemäßen Verfahrensschritt (II) oder den ihm ggf. nachfolgenden Verfahrensschritten die für magneto-optische Aufzeichnungsmaterialien typische, übliche und bekannte, definierte, senkrecht zur Oberfläche orientierte Magnetisierung der Aufzeichnungsschicht (B) an.

Das Ergebnis der zweiten Ausführungsform des erfindungsgemäßen Verfahrens ist das flächenförmige, mehrschichtige magneto-optische Aufzeichnungsmaterial mit

(A) dem optisch klaren dimensionsstabilen Träger, welcher aus den vorstehend genannten Materialien besteht und dessen Oberfläche Spurrillen aufweist,

(C) der in der vorstehend im einzelnen beschriebenen Weise hergestellten, optisch klaren, ersten Antikorrosionsschicht,

(B) der thermisch veränderbaren Aufzeichnungsschicht aus einer amorphen Lanthanid-Übergangsmetall-Legierung geeigneter Zusammensetzung und Dicke und

(C) der zweiten (obersten) Antikorrosionsschicht.

Das erfindungsgemäße Verfahren kann bei Bedarf unter Anwendung üblicher und bekannter Verfahrensschritte weiter ausgestaltet werden. Zusätzlich zu den bereits genannten Möglichkeiten des Aufbringens weiterer Schichten auf der obersten Antikorrosionsschicht (C)

- können Interferenz- und/oder Haftschichten zwischen dem Träger (A) und der Aufzeichnungsschicht (B) und/oder der ersten Antikorrionsschicht (C) erzeugt werden,
- oder vor dem Aufbringen der dem Träger (A) abgewandten Antikorrosionsschicht (C) können weitere Interferenz- und/oder Reflektionsschichten auf der Aufzeichnungsschicht (B) erzeugt werden,
- oder zwei in erfindungsgemäßer Weise hergestellte Aufzeichnungsmaterialien werden so miteinander verbunden, daß ihre Aufzeichnungsschichten (B) einander "sandwich"-artig zugekehrt sind, wobei die üblichen und bekannten Techniken zum Verbinden zweier Disks angewandt werden.

Indessen ändern diese Ausgestaltungen nichts an dem erfindungsgemäßen Verfahren als solchem, sondern es werden lediglich zusätzliche übliche und bekannte Verfahrensschritte ausgeführt, und/oder die Abfolge einzelner Verfahrensschritte wird aus leicht einsehbaren Gründen geändert. Somit bleiben die besonderen Vorteile und technischen Effekte des erfindungsgemäßen Verfahrens unabhängig von seiner Ausführungsform und deren Ausgestaltung in vollem Umfang erhalten.

Das erfindungsgemäße Verfahren weist besondere Vorteile auf. So bietet es in weitaus größerem Maß, als bislang denkbar war, die Möglichkeit, Antikorrosionsschichten (C) der unterschiedlichsten Zusammensetzung in einfacher und exakt reproduzierbarer Weise herzustellen, wodurch sich neue bislang nicht erkannte oder nicht für realisierbar erachtete Möglichkeiten zur Anpassung der Antikorrosionsschicht (C) an eine vorgegebene Aufzeichnungsschicht (B) eröffnen.

Diese Vorteile schlagen auch bei den in erfindungsgemäßer Verfahrensweise hergestellten flächenförmigen mehrschichtigen magneto-optischen Aufzeichnungsmaterialien und hier insbesondere bei den entsprechenden Datenplatten oder Disks zu Buche:

Die nach dem erfindungsgemäßen Verfahren hergestellten Aufzeichnungsmaterialien können in der üblichen weise von der Seite des optisch transparenten dimensionsstabilen Trägers (A) her mit Hilfe eines impulsmodulierten, auf die Aufzeichnungsschichten (B) fokussierten und/oder senkrecht auf diese auftreffenden Schreiblaserstrahls einer Wellenlänge λ von kleiner als 1000 nm mit Daten in Form ummagnetisierter "spots" beschrieben werden. Hiernach können die Daten mit Hilfe eines auf die beschriebenen Aufzeichnungsschichten (B) fokussierten und/oder senkrecht auf sie auftreffenden Dauerstrichlaserstrahls gelesen werden, wobei man das von den Aufzeichnungsschichten (B) selbst oder das von den gegebenenfalls vorhandenen Reflektionsschichten zurückreflektierte Licht erfaßt, analysiert und in Signale umwandelt. Im Falle der in erfindungsgemäßer Weise hergestellten Datenplatten oder Disks können hierfür die üblichen und bekannten laseroptischen Plattenlaufwerke mit laseroptischen Köpfen, welche Halbleiterlaser enthalten, verwendet werden.

Auch hierbei weisen die in erfindungsgemäßer Weise erhaltenen Aufzeichnungsmaterialien gegenüber dem Stand der Technik besondere Vorteile auf. So haben sie eine höhere Empfindlichkeit als bekannte Aufzeichnungsmaterialien, weswegen sie mit geringerer Laserleistung beschrieben werden können. Erfindungsgemäß hergestellte magneto-optische Datenplatten (Disks) können daher - bei gleicher Laserleistung - bei höheren Plattendrehzahlen beschrieben werden, als die in bekannter Weise hergestellten Disks. Auch ihre Bitdichte ist gegenüber dem Stand der Technik deutlich erhöht. Beim Lesen liefern sie unverzerrte Signale und weisen ein Signal-Rausch-Verhältnis von mehr als 55 dB auf. Selbst nach einer Lagerzeit von mehr als 1000 Stunden bei 70°C und einer relativen Luftfeuchtigkeit von 90 % kommt es nicht zu einer Erhöhung der Bitfehlerrate ("bit error rate"), d.h. es tritt kein Informationsverlust auf.

Die Aufzeichnungsmaterialien weisen mindestens eine kratzfeste, harte, haftfeste und mechanisch feste Antikorrosionsschicht (C) auf, welche nicht spröde ist und die luft- und wasserempfindlichen Aufzeichnungsschichten (B) hervorragend abschirmt. Überdies können die Antikorrosionsschichten (C) hinsichtlich ihrer optischen und mechanischen Eigenschaften sowie ihrer Haftungseigenschaften in hervorragender Weise den übrigen Schichten der Aufzeichnungsmaterialien angepaßt werden.

Beispiele

Beispiele 1 bis 4

Die Herstellung magneto-optischer Datenplatten nach dem erfindungsgemäßen Verfahren und die Eigenschaften der so hergestellten Datenplatten;
Allgemeine Versuchsvorschrift:
Es wurden als Träger (A) vier 130 mm durchmessende, 1,2 mm dicke, mit Spurrillen versehene Polycarbonatscheiben durch Spritzgießen unter Reinraumbedingungen hergestellt.

Hiernach wurden auf die mit Spurrillen versehene Seite der Polycarbonatscheiben (A) die einzelnen Schichten in der gewünschten Reihenfolge und Dicke und mit dem jeweils gewünschten inneren Aufbau aus der Gasphase aufgebracht. Dabei erfolgte das Aufbringen der Interferenzschichten und der einzelnen Lagen ($C_{14}$) der Schichten ($C_1$) durch Kathodenzerstäubung des betreffenden Metalls und durch Beimengen der gewünschten Mengen an Kohlenwasserstoffen, Sauerstoff und/oder Stickstoff über die Gasphase. Dagegen wurden die Aufzeichnungsschichten (B) und die Elementlagen ($C_{13}$) durch Kathodenzerstäubung der betreffenden Elemente erzeugt. Hierbei wurden die Bedingungen so gewählt, daß sich die in der Tabelle 1 angegebenen Zusammensetzungen der Datenplatten ergaben. Bei den Beispielen 1 und 4 wurde die oberste Lage ($C_{14}$), (Beispiel 2, $Al_2O_3$; Beispiel 4, $TiO_2$) durch partielle Oxidation der betreffenden Elementlage ($C_{13}$) hergestellt.

Ein derartiger Schichtaufbau, insbesondere nach den Beispielen 3 und 4 (Tabelle 1), ist auch in der EP-A-0 326 930 in Tabelle 1 dargestellt, wobei die Dicke der zweiten Schicht C dort höher ist.

Die so erhaltenen Datenplatten wurden in einer Vakuumkammer, welche mit zwei Schleusen zum automatischen Ein- und Ausbringen von Datenplatten, mit Anschlüssen für die Zufuhr von Sauerstoff und von Inertgasen, mit Sichtfenstern, mit einem optischen System zur Bestimmung der Reflektivität der Datenplatten sowie mit den üblichen und bekannten Regelsystemen für Druck und Temperatur ausgerüstet waren, während 10 bis 60 Sekunden bei 70°C so lange reinem aktiviertem Sauerstoff eines Drucks von $10^{-1}$ mbar ausgesetzt, bis die Elementlage(n) ($C_{13}$) der jeweiligen Schichten ($C_{14}$) vollständig zu Oxidlagen ($C_{14}$) umgesetzt waren. Der Endpunkt dieser Umsetzung wurde mit Hilfe des optischen Systems bestimmt.

Die Aufzeichnungsschichten (B) der in dieser Weise erhaltenen Datenplatten wurden senkrecht zu Ihrer Oberfläche magnetisiert und mit Hilfe eines üblichen und bekannten laseroptischen Plattenlaufwerks mit Daten beschrieben. Dabei verwendete man einen impulsmodulierten GaAlAs-Halbleiterlaser, welcher linear polarisiertes Licht der Wellenlänge $\lambda$ = 830 nm emittierte.

Sowohl die Bitlänge, d.h. der "Spot"-Durchmesser, als auch der Bitabstand, d.h. der Abstand von "spot" zu "spot", lagen bei etwa 1 $\mu$m.

Für das Lesen der eingeschriebenen Daten über den Kerr-Effekt (Beispiele 1 und 2) oder über den Faraday-Effekt (Beispiel 3 und 4) verwendete man den GaAlAs-Halbleiterlaser in Dauerstrichbetrieb mit einer Lichtleistung von kleiner als 1 mW. Die unkorrigierte Bitfehlerrate wurde in üblicher und bekannter Weise mittels eines Zeitintervallanalysators ("time interval analyzer", TIA) bestimmt. Die Datenplatten wurden unmittelbar nach dem Beschreiben gelesen (1. Lesen), anschließend 1000 Stunden bei 70°C und einer relativen Luftfeuchtigkeit von 90 % gelagert, und dann erneut gelesen (2. Lesen). Die betreffenden Ergebnisse finden sich in der Tabelle 2.

Vergleichsversuche V1 und V2

Herstellung und Eigenschaften bekannter Aufzeichnungsmaterialien

Nach der bei den Beispielen 1 bis 4 angegebenen Vorschrift wurden zwei Datenplatten hergestellt, welche in Aufbau und Zusammensetzung den aus der DE-A-33 35 689 bekannten Proben A-2 und B-5 glichen. Der Aufbau der Vergleichsplatten wird in der Tabelle 1 dem Aufbau der erfindungsgemäßen Datenplatten gegenübergestellt. Bei der Herstellung dieser Vergleichsplatten wurde auf die Sauerstoffbehandlung verzichtet.

Die bekannten Datenplatten V1 und V2 wurden, wie bei den Beispielen 1 bis 4 angegeben, magnetisiert, mit Daten beschrieben, gelesen und getestet. Die dabei erhaltenen Versuchsergebnisse werden in der Tabelle 2 mit den Werten aus den Beispielen 1 bis 4 verglichen.

Der Vergleich zeigt, daß die Aufzeichnungsmaterialien V1 und V2 bekannter Zusammensetzung den erfindungsgemäßen Aufzeichnungsmaterialien hinsichtlich der Lagerstabilität unterlegen waren, was sich an der deutlich erhöhten Bitfehlerrate der bekannten Aufzeichnungsmaterialien bemerkbar machte.

In der nachfolgenden Tabelle 1 steht die Kurzbezeichnung
- "AlC" für Aluminiumcarbid,
- "TiN" für Titannitrid und

EP 0 326 933 B1

Tabelle 1: Aufbau und Zusammensetzung erfindungsgemäß und nicht erfindungsgemäß hergestellter Datenplatten

| Beispiel | Interferenz-schicht 1 (auf dem Träger A) (nm) | Aufzeich-nungs-schicht (B) (nm) | Interferenz-schicht 2 (auf der Auf-zeichnungs-schicht B) (nm) | Reflektions-schicht (nm) | Schicht $(C_1)$: Lagen $(C_{13})$ oder $(C_{14})$ (nm) | | | | | Gesamt-dicke (nm) |
|---|---|---|---|---|---|---|---|---|---|---|
| 1 | SiO (80) | TbDyFe (80) | --- | --- | AlN (20) | "AlC" (20) | Ta (20) | $Ta_2O_5$ (10) | --- | (70) |
| 2 | SiO (80) | TbDyFe (90) | --- | --- | AlN (20) | Al (20) | "AlC" (20) | Al (10) | $Al_2O_3$ (10) | (80) |
| 3 | SiO (80) | TbDyFe (25) | AlN (100) | Al (500) | SiC (20) | "SiN" (20) | Si (10) | SiO (20) | --- | (70) |
| 4 | SiO (80) | TbDyFe (20) | AlN (300) | Al (500) | "TiN" (20) | $TiO_2$ (20) | Ti (20) | $TiO_2$ (20) | --- | (80) |
| Vergleichs-versuch | | | | | | | | | | |
| V1 | | TbDyFe (60) | $TiO_2$ (200) | --- | $Al_2O_3$ (300) | --- | --- | --- | --- | (300) |
| V2 | | TbDyFe (25) | $CeO_2$ (100) | Al (500) | CrN (300) | --- | --- | --- | --- | (300) |

Tabelle 1: Fortsetzung

| Beispiel | Antikorrosionsschicht (C):<br>Lagen $(C_{14})$ | | | | Gesamtdicke |
|---|---|---|---|---|---|
| | (nm) | (nm) | (nm) | (nm) | (nm) |
| 1 | AlN<br>(20) | "AlC"<br>(20) | $Ta_2O_5$<br>(30) | -----<br> | (70) |
| 2 | AlN<br>(20) | $Al_2O_3$<br>(20) | "AlC"<br>(20) | $Al_2O_3$<br>(20) | (80) |
| 3 | SiC<br>(20) | "SiN"<br>(20) | SiO<br>(30) | -----<br> | (70) |
| 4 | "TiN"<br>(20) | $TiO_2$<br>(60) | ----<br> | -----<br> | (80) |

EP 0 326 933 B1

Tabelle 2: Versuchsergebnisse

| Beispiel | Bitfehlerrate (unkorrigiert) | |
| --- | --- | --- |
| | 1. Lesen | 2. Lesen |
| 1 | $< 10^{-5}$ | $< 10^{-5}$ |
| 2 | $< 10^{-5}$ | $< 10^{-5}$ |
| 3 | $< 10^{-5}$ | $< 10^{-5}$ |
| 4 | $< 10^{-5}$ | $< 10^{-5}$ |
| Vergleichs-versuch | | |
| V1 | $10^{-5}$ | $> 10^{-4}$ |
| V2 | $10^{-5}$ | $> 10^{-4}$ |

**Patentansprüche**

1. Verfahren zur Herstellung eines flächenförmigen, mehrschichtigen magneto-optischen Aufzeichnungsmaterials mit

(A) einem optisch transparenten dimensionsstabilen Träger,

(B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit

(C) einer ein- oder mehrlagigen, Carbide, Nitride und/oder Oxide enthaltenden Schicht,

bei welchem man die einzelnen Schichten (B) und (C) auf dem Träger (A) in der gewünschten Reihenfolge, Anzahl und Dicke und mit dem jeweils gewünschten inneren Aufbau über die Gasphase aufbringt, wonach man in der Aufzeichnungsschicht (B) eine definierte, senkrecht zu ihrer Oberfläche orientierte Magnetisierung induziert, dadurch gekennzeichnet, daß man hierbei auf einer oder auf beiden Seiten der Aufzeichnungsschicht (B) die Schicht (C) durch

(I) Aufbringen einer 30 bis 500 nm dicken Schicht ($C_1$) aus

($C_{11}$) zwei oder mehr Komponenten, welche

($C_{12}$) in drei oder mehr separaten Element- sowie Element-carbid-, -nitrid- und -oxidlagen aus jeweils einer oder mehreren der Komponenten vorliegen, wobei

($C_{13}$) die Komponente(n) der Elementlage(n) aus der Gruppe der Elemente B, Al, Ga, In, Si, Ge, Sn, Pb, Sb, Bi, Mg, Ti, Zr, Hf, V, Nb, Ta, Cr, Mo, W, Fe, Co, Zn, Cd, La, Ce, Pr, Nd, Sm, Eu, Gd, Tb, Dy, Ho, Er, Tm, Yb, Lu und Th und

($C_{14}$) die Komponente(n) der Elementcarbid-, -nitrid- und -oxidlage(n) aus der Gruppe der Carbide, Nitride und Oxide dieser Elemente ($C_{13}$) ausgewählt werden und wobei

($C_{15}$) direkt benachbarte Lagen aus Carbiden, Nitriden und/oder Oxiden ($C_{14}$) sich stofflich voneinander unterscheiden,

($C_{16}$) zumindest zwei Lagen aus Carbiden, Nitriden und/oder Oxiden ($C_{14}$) bestehen, die durch mindestens eine 0,1 bis 30 nm dicke, aus mindestens einem der Elemente ($C_{13}$) bestehende Lage voneinander getrennt sind und

($C_{17}$) die an die Aufzeichnungsschicht (B) direkt angrenzende oder die ihr zugewandte Lage stets aus Carbiden, Nitriden und/oder Oxiden ($C_{14}$) besteht,

und durch

13

(II) anschließendes Umsetzen der aus mindestens einem der Elemente $(C_{13})$ bestehenden Lage(n) der Schicht $(C_1)$ mit Sauerstoff, Stickstoff und/oder Kohlenstoff

erzeugt.

2. Verfahren zur Herstellung eines flächenförmigen, mehrschichtigen magneto-optischen Aufzeichnungsmaterials nach Anspruch 1, dadurch gekennzeichnet, daß die an die Aufzeichnungsschicht (B) direkt angrenzende oder ihr zugewandte Lage der Schicht $(C_1)$ aus mindestens einem Nitrid $(C_{14})$ hergestellt wird.

3. Verfahren zur Herstellung eines flächenförmigen, mehrschichtigen magneto-optischen Aufzeichnungsmaterials nach Anspruch 1 oder 2, dadurch gekennzeichnet, daß die der Aufzeichnungsschicht (B) abgewandte oberste Lage der Schicht $(C_1)$ aus mindestens einem Oxid $(C_{14})$ hergestellt wird.

4. Flächenförmiges, mehrschichtiges magneto-optisches Aufzeichnungsmaterial mit
    (A) einem optisch transparenten dimensionsstabilen Träger,
    (B) einer thermisch veränderbaren Aufzeichnungsschicht aus einer amorphen Lanthanid-Übergangsmetall-Legierung und - zumindest auf der dem Träger (A) abgewandten Seite der Aufzeichnungsschicht (B) - mit
    (C) einer ein- oder mehrlagigen, Carbide, Nitride und/oder Oxide enthaltenden Schicht,
bei welchem in der Aufzeichnungsschicht (B) eine definierte, senkrecht zu ihrer Oberfläche orientierte Magnetisierung induziert ist, dadurch gekennzeichnet, daß auf einer oder auf beiden Seiten der Aufzeichnungsschicht (B) die gegebenenfalls optisch klare Schicht (C) angeordnet ist, die aus einer 30 bis 500 nm dicken Schicht $(C_1)$ aus
    $(C_{11})$ zwei oder mehr Komponenten besteht, welche
    $(C_{12})$ in drei oder mehr separaten Element- sowie Element-carbid-, -nitrid- und -oxidlagen aus jeweils einer oder mehreren der Komponenten vorliegen, wobei
    $(C_{13})$ die Komponente(n) der Elementlage(n) aus der Gruppe der Elemente B, Al, Ga, In, Si, Ge, Sn, Pb, Sb, Bi, Mg, Ti, Zr, Hf, V, Nb, Ta, Cr, Mo, W, Fe, Co, Zn, Cd, La, Ce, Pr, Nd, Sm, Eu, Gd, Tb, Dy, Ho, Er, Tm, Yb, Lu und Th und
    $(C_{14})$ die Komponente(n) der Elementcarbid-, -nitrid- und -oxidlage(n) aus der Gruppe der Carbide, Nitride und Oxide dieser Elemente $(C_{13})$ ausgewählt werden und wobei
    $(C_{15})$ direkt benachbarte Lagen aus Carbiden, Nitriden und/oder Oxiden $(C_{14})$ sich stofflich voneinan-der unterscheiden,
    $(C_{16})$ zumindest zwei Lagen aus Carbiden, Nitriden und/oder Oxiden $(C_{14})$ bestehen, die durch mindestens eine 0,1 bis 30 nm dicke, aus mindestens einem der Elemente $(C_{13})$ bestehende Lage voneinander getrennt sind und
    $(C_{17})$ die an die Aufzeichnungsschicht (B) direkt angrenzende oder die ihr zugewandte Lage stets aus Carbiden, Nitriden und/oder Oxiden $(C_{14})$ besteht,
und die aus mindestens einem der Elemente $(C_{13})$ bestehende(n) Lage(n) der Schicht $(C_1)$ mit Sauerstoff, Stickstoff und/oder Kohlenstoff vollständig umgesetzt sind.

5. Flächenförmiges, mehrschichtiges magneto-optisches Aufzeichnungsmaterial nach Anspruch 4, dadurch gekennzeichnet, daß eine zwischen dem Träger (A) und der Aufzeichnungsschicht (B) angeordnete Schicht (C) optisch klar ist.

6. Verfahren zum reversiblen laseroptischen Schreiben und Lesen von Daten, bei welchem man
    (a) die Daten mittels eines Schreiblaserstrahls in die thermisch veränderbare Aufzeichnungsschicht (B) eines flächenförmigen, mehrschichtigen magneto-optischen Aufzeichnungsmaterials in der Form ummagnetisierter Bereiche einschreibt, wonach man
    (b) die eingeschriebenen Daten mittels eines Leselaserstrahls unter Ausnutzung des magneto-optischen Kerr- oder Faraday-Effektes liest und gegebenenfalls
    (c) die Daten nach dem Lesen durch lokales Erwärmen der Aufzeichnungsschicht (B) gegebenenfalls bei gleichzeitiger Einwirkung eines Magnetfeldes wieder löscht, wonach man gegebenenfalls
    (d) neue Daten einschreibt,
dadurch gekennzeichnet, daß man hierfür ein Aufzeichnungsmaterial verwendet, welches man gemäß einem der Ansprüche 1 bis 3 hergestellt hat.

**Claims**

1. A process for the production of a sheet-like, multilayer magneto-optical recording material comprising
   (A) an optically transparent dimensionally stable substrate,
   (B) a thermally alterable recording layer consisting of an amorphous lanthanide/transition metal alloy and, at least on that side of the recording layer (B) which faces away from the substrate (A),
   (C) a single-stratum or multi-stratum layer containing carbides, nitrides and/or oxides,
   in which the individual layers (B) and (C) are applied to the substrate (A) in the desired order, number and thickness and with the particular desired internal structure from the gas phase, after which a defined magnetization oriented at right angles to the surface of the recording layer (B) is induced in the said layer, wherein the layer (C) is produced on one or both sides of the recording layer (B) by
   (I) application of a 30-500 nm thick layer $(C_1)$ of
      $(C_{11})$ two or more components which
      $(C_{12})$ are contained in three or more separate element and element carbide, nitride and oxide strata, each consisting of one or more of the components,
      $(C_{13})$ the component or components of the element stratum or strata being selected from the group consisting of the elements B, Al, Ga, In, Si, Ge, Sn, Pb, Sb, Bi, Mg, Ti, Zr, Hf, V, Nb, Ta, Cr, Mo, W, Fe, Co, Zn, Cd, La, Ce, Pr, Nd, Sm, Eu, Gd, Tb, Dy, Ho, Er, Tm, Yb, Lu and Th and
      $(C_{14})$ the component or components of the element carbide, nitride and oxide stratum or strata being selected from the group consisting of the carbides, nitrides and oxides of these elements $(C_{13})$, and
      $(C_{15})$ directly adjacent strata of carbides, nitrides and/or oxides $(C_{14})$ differing in composition from one another,
      $(C_{16})$ at least two strata consisting of carbides, nitrides and/or oxides $(C_{14})$ which are separated from one another by at least one 0.1-30 nm thick stratum consisting of at least one of the elements $(C_{13})$ and
      $(C_{17})$ the stratum directly adjacent to the recording layer (B) or the stratum facing said layer always consisting of carbides, nitrides and/or oxides $(C_{14})$
   and by
   (II) subsequent reaction of the stratum or strata of the layer $(C_1)$, which stratum or strata consists or consist of at least one of the elements $(C_{13})$, with oxgyen, nitrogen and/or carbon.

2. A process for the production of a sheet-like, multilayer magneto-optical recording material as claimed in claim 1, wherein that stratum of the layer $(C_1)$ which is directly adjacent to the recording layer (B) or faces it is produced from at least one nitride $(C_{14})$.

3. A process for the production of a sheet-like, multilayer magneto-optical recording material as claimed in claim 1 or 2, wherein the uppermost stratum of the layer $(C_1)$, which stratum faces away from the recording layer (B), is produced from at least one oxide $(C_{14})$.

4. A sheet-like, multilayer magneto-optical recording material comprising
   (A) an optically transparent dimensionally stable substrate,
   (B) a thermally alterable recording layer consisting of an amorphous lanthanide/transition metal alloy and at least on that side of the recording layer (B) which faces away from the substrate (A),
   (C) a single-stratum or multi-stratum layer containing carbides, nitrides and/or oxides,
   in which a defined magnetization oriented at right angles to the surface of the recording layer (B) is induced in said layer, wherein one or both sides of the recording layer (B) bears or bear the layer (C) which may be optically transparent and consists of a 30-500 nm thick layer $(C_1)$ of
      $(C_{11})$ two or more components which
      $(C_{12})$ are contained in three or more separate element and element carbide, nitride and oxide strata, each consisting of one or more of the components,
      $(C_{13})$ the component or components of the element stratum or strata being selected from the group consisting of the elements B, Al, Ga, In, Si, Ge, Sn, Pb, Sb, Bi, Mg, Ti, Zr, Hf, V, Nb, Ta, Cr, Mo, W, Fe, Co, Zn, Cd, La, Ce, Pr, Nd, Sm, Eu, Gd, Tb, Dy, Ho, Er, Tm, Yb, Lu and Th and
      $(C_{14})$ the component or components of the element carbide, nitride and oxide stratum or strata being selected from the group consisting of the carbides, nitrides and oxides of these elements $(C_{13})$, and
      $(C_{15})$ directly adjacent strata of carbides, nitrides and/or oxides $(C_{14})$ differing in composition from one another,

($C_{16}$) at least two strata consisting of carbides, nitrides and/or oxides ($C_{14}$) which are separated from one another by at least one 0.1-30 nm thick stratum consisting of at least one of the elements ($C_{13}$) and

($C_{17}$) the stratum directly adjacent to the recording layer (B) or the stratum facing said layer always consisting of carbides, nitrides and/or oxides ($C_{14}$)

and the stratum or strata of the layer ($C_1$) which stratum or strata which consists or consist of at least one of the elements ($C_{13}$) is or are completely reacted with oxgyen, nitrogen and/or carbon.

5. A sheet-like, multilayer magneto-optical recording material as claimed in claim 4, wherein a layer (C) arranged between the substrate (A) and the recording layer (B) is optically transparent.

6. A process for reversible laser-optical recording and reading of data, in which

(a) the data are recorded by means of a write laser beam in the thermally alterable recording layer (B) of a sheet-like, multilayer magneto-optical recording material in the form of magnetically reversible parts, after which

(b) the recorded data are read by means of a read laser beam utilizing the magneto-optical Kerr or Faraday effect and, if required,

(c) the data, after having been read, are erased by local heating of the recording layer (B), if necessary with the simultaneous action of a magnetic field, after which, if required,

(d) new data are recorded,

wherein a recording material which has been produced as claimed in any of claims 1 to 3 is used for this purpose.

**Revendications**

1. Procédé de fabrication d'un support d'enregistrement magnéto-optique multicouche plat comportant

(A) un substrat transparent de dimensions stables,

(B) Une couche d'enregistrement modifiable thermiquement, constituée d'un alliage amorphe de lanthanides et de métaux de transition et, au moins sur la face de la couche d'enregistrement (B) détournée du substrat (A),

(C) une couche contenant des carbures, nitrures et/ou oxydes en une ou plusieurs strates,

dans lequel on applique les couches (B) et (C) sur le substrat (A) en phase gazeuse dans l'ordre, en le nombre et en l'épaisseur désirés et avec la constitution interne désirée pour chacune, après quoi on induit dans la couche d'enregistrement (B) une aimantation définie orientée perpendiculairement à la surface de celle-ci, caractérisé par le fait qu'on produit la couche (C) sur une face ou sur les deux faces de la couche d'enregistrement (B) en

(I) appliquant une couche (C1) de 30 à 500 nm d'épaisseur composée de

(C11) deux ou plus de deux constituants

(C12) se présentant en trois ou plus de trois strates séparées d'éléments et de carbures, nitrures et oxydes d'éléments constituées chacune d'un ou de plusieurs des constituants,

(C13) le ou les constituants de la ou des strates d'éléments étant choisi(s) dans le groupe des éléments B, Al, Ga, In, Si, Ge, Sn, Pb, Sb, Si, Mg, Ti, Zr, Hf, V, Nb, Ta, Cr, Mo, W, Fe, Co, Zn, Cd, La, Ce, Pr, Nd, Sm, Eu, Gd, Tb, Dy, Ho, Er, Tm, Yb, Lu et Th et(C14)le ou les constituants de la ou des strates de carbures, nitrures et oxydes d'éléments étant choisi(s) dans le groupe des carbures, nitrures et oxydes de ces éléments (C13), et

(C15) les strates de carbures, nitrures et/ou oxydes (C14) immédiatement voisines étant de matières différentes,

(C16) au moins deux strates étant constituées de carbures, nitrures et/ou oxydes (C14) et séparées par au moins une strate de 0,1 à 30 nm d'épaisseur constituée d'au moins un des éléments (C13), et

(C17) la strate immédiatement contiguë à la couche d'enregistrement (B) ou la strate tournée vers celle-ci étant toujours constituée de carbures, nitrures et/ou oxydes, et

(II) ensuite transformant la ou les strates de la couche (CI) constitué(s) d'au moins un des éléments (C13) à l'oxygène, à l'azote et/ou au carbone.

2. Procédé de fabrication d'un support d'enregistrement magnéto-optique multicouche plat selon la revendication 1, caractérisé par le fait qu'on réalise la strate de la couche (C1) immédiatement contiguë à la couche d'enregistrement (B) ou tournée vers celle-ci avec au moins un nitrure (C14).

**3.** Procédé de fabrication d'un support d'enregistrement magnéto-optique multicouche plat selon l'une des revendications 1 et 2, caractérisé par le fait qu'on réalise la strate supérieure, détournée de la couche d'enregistrement (B), de la couche (C1) avec au moins un oxyde (C14). :

**4.** Support d'enregistrement magnéto-optique multicouche plat comportant
(A) un substrat transparent de dimensions stables,
(B) une couche d'enregistrement modifiable thermiquement constituée d'un alliage amorphe de lanthanides et de métaux de transition et, au moins sur la face du support d'enregistrement (B) détournée du substrat (A),
(C) une couche contenant des carbures, nitrures et/ou oxydes en une ou plusieurs strates,
et dans la couche d'enregistrement (B) duquel est induite une aimantation définie orientée perpendiculairement à la surface de celle-ci, caractérisé par le fait que la couche (C), éventuellement transparente, est placée sur une face ou sur les deux faces de la couche d'enregistrement (B) et constituée d'une couche (C1) de 30 à 500 nm d'épaisseur composée de
(C11) deux ou plus de deux constituants
(C12) se présentant en trois ou plus de trois strates séparées d'éléments et de carbures, nitrures et oxydes d'éléments constituées chacune d'un ou de plusieurs des constituants.
(C13) le ou les constituants de la ou des strates d'éléments étant choisi(s) dans le groupe des éléments B, Al, Ga, In, Si, Ge, Sn, Pb, Sb, Bi, Mg, Ti, Zo, Hf, V, Nb, Ta, Cr, Mo, W, Fe, Co, Zn, Cd, La, Ce, Pr, Nd, Sm, Eu, Gd, Tb, Dy, Ho, Er, Tm, Yb, Lu et Th et
(C14) le ou les constituants de la ou des strates de carbures, nitrures et oxydes d'éléments étant choisi(s) dans le groupe des carbures, nitrures et oxydes de ces éléments (C13), et
(C15) les strates de carbures, nitrures et/ou oxydes (C14) immédiatement voisines de matières différentes,
(C16) au moins deux strates étant constituées de carbures, nitrures et/ou oxydes (C14) et séparées par au moins une strate de 0,1 à 30 nm d'épaisseur constituée d'au moins un des éléments (C13), et
(C17) la strate immédiatement contiguë à la couche d'enregistrement (B) ou la strate tournée vers celle-ci étant toujours constituée de carbures, nitrures et/ou oxydes,
et la ou les strates de la couche (C1) constitué(s) d'au moins un des éléments (C13) est ou sont entièrement transformée(s) à l'oxygène, à l'azote et/ou au carbone.

**5.** Support d'enregistrement magnéto-optique multicouche plat selon la revendication 4, caractérisé par le fait qu'une couche (C) placée entre le substrat (A) et la couche d'enregistrement (B) est transparente.

**6.** Procédé d'écriture et de lecture optiques laser réversibles dans lequel
(a) on écrit les données au moyen d'un faisceau laser d'écriture dans la couche d'enregistrement modifiable thermiquement (B) d'un support d'enregistrement magnéto-optique multicouche plat sous la forme de zones non aimantées, après quoi
(b) on lit les données écrites au moyen d'un faisceau laser de lecture en utilisant l'effet magnéto-optique Kerr ou Faraday et éventuellement
(c) efface les données après la lecture en chauffant localement la couche d'enregistrement (B), éventuellement avec action simultanée d'un champ magnétique, après quoi, éventuellement,
(d) on écrit de nouvelles données,
caractérisé par le fait qu'on a utilisé pour cela un matériau d'enregistrement fabriqué selon l'une des revendications 1 à 3.